# EUROPÄISCHE PATENTANMELDUNG

(11) **EP 1 005 897 A2**
(43) Veröffentlichungstag der Anmeldung: **07.06.2000**
(21) Anmeldenummer: 99123499.8
(22) Anmeldetag: 25.11.1999
(51) Int. Cl.: B01F 3/04

(54) **Vorrichtung zur Karbonisierung von Getränken**

(30) Priorität: 30.11.1998 DE 19855170
(71) Anmelder: Sparkling Krämer GmbH, 45899 Gelsenkirchen (DE)
(72) Erfinder: Wensing, Günther, 48703 Stadtlohn (DE)
(74) Vertreter: Schneiders, Josef, Dipl.-Ing.

(57) **Zusammenfassung**

Die Erfindung betrifft eine Vorrichtung (1) zur Karbonisierung von in Flaschen (7) enthaltenen Getränken, mit einem Gehäuse (2), welches ein Flaschen-Aufnahmefach hat, einen Kohlendioxid-Vorratsbehälter (4), welcher an ein manuell bedienbares Dosierventil (3) anschließbar ist, einem an das Dosierventil (3) angeschlossenes Düsenrohr (6), und einer Anschlußeinrichtung, die ein Verschlußstück (8) mit einer Dichtung (9) aufweist, die dichtend gegen die Flaschenmündung anpreßbar ist, wobei das Düsenrohr (6) durch das Verschlußstück (8) in das Flascheninnere abgedichtet hindurchgeführt ist. Um eine bequemere und einfachere Handhabung, insbesondere eine Einhand-Bedienung zu ermöglichen und dabei eine bessere Qualität der Karbonisierung zu erreichen, schlägt die Erfindung vor, daß das Düsenrohr (6) im Verschlußstück (8) längsverschiebbar gelagert ist, und daß die Anschlußeinrichtung eine manuell betätigbare, kraftverstärkende Anpreßvorrichtung mit einem Bedienungselement (11) aufweist, die bei Betätigung die Dichtung (9) gegen die Flaschenmündung preßt und die in dieser Dichtstellung selbsthaltend ist.

## Beschreibung

Die vorliegende Erfindung betrifft eine Vorrichtung zur Karbonisierung von in Flaschen enthaltenen Getränken, mit einem Gehäuse, welches ein Flaschen-Aufnahmefach hat, einem Kohlendioxid-Vorratsbehälter, welcher an ein manuell bedienbares Dosierventil anschließbar ist, einem an das Dosierventil angeschlossenen Düsenrohr und einer Anschlußeinrichtung, die ein Verschlußstück mit einer Dichtung aufweist, die dichtend gegen die Flaschenmündung anpreßbar ist, wobei das Düsenrohr durch das Verschlußstück in das Flascheninnere abgedichtet hindurchgeführt ist.

Derartige Vorrichtungen erfreuen sich als kompakte Haushaltsgeräte zur Herstellung erfrischend sprudelnder, kohlensäurehaltiger Getränke bei den Endverbrauchern wachsender Beliebtheit. Sie ermöglichen auf einfache Weise Sodawasser aus gewöhnlichem Wasser, das heißt Leitungswasser, zu bereiten, sowie Säfte, Mischgetränke oder beliebige andere Flüssigkeiten flaschenweise mit Kohlendioxid zu versetzen, welches in kleinen Vorrats-Druckflaschen erhältlich ist.

Die Funktionsweise ist bei den nach dem Stand der Technik bekannten Geräten im wesentlichen gleich: Das mit Kohlensäure zu versetzende Getränk wird in eine Flasche eingefüllt. Diese wird aufrecht stehend gasdicht an die Anschlußeinrichtung angekoppelt, die in der Regel einen oben im Flaschen-Aufnahmefach angeordneten Füllstutzen hat. Anschließend wird von Hand das Dosierventil betätigt, wobei das Flascheninnere durch das Düsenrohr mit Kohlendioxid beaufschlagt wird. Nach dem Lösen der Flasche von der Anschlußeinrichtung und der Entnahme aus dem Flaschen-Aufnahmefach ist das in der Flasche enthaltene, nunmehr kohlensäurehaltige Getränk zum Verzehr bereit.

Von besonderer Bedeutung ist bei derartigen Geräten für den Hausgebrauch eine einfache, bequeme und möglichst sichere Handhabung, bei gleichzeitig hohem Qualitätsstandard des Getränks bezüglich Kohlensäuregehalt, Feinperligkeit und dergleichen. Diesen Anforderungen versuchen die nach dem Stand der Technik bekannten Geräte auf unterschiedliche Weise Rechnung zu tragen.

Aus der EP 0 172 815 B1 ist ein derartiges Gerät bekannt, bei dem die Anschlußeinrichtung für die Flasche ein Einschraubgewinde oder einen Bajonett-Anschluß aufweist, in dem die Flasche mit ihrem Flaschengewinde bzw. mit am Flaschenhals angeformten Bajonett-Nocken fest am Anschlußstutzen verriegelbar ist. Dieser Anschluß hat zwar den Vorteil, daß die Flasche fest und dicht am Anschlußstutzen sitzt. Das Einsetzen einer gefüllten Getränkeflasche in diese Vorrichtung ist jedoch relativ unbequem, da die Flasche zunächst von unten über das Düsenrohr geführt und anschließend noch mit einer Drehbewegung verriegelt werden muß. Eine Einhand-Bedienung ist damit, insbesondere für Personen mit kleineren Händen, praktisch kaum durchführbar. Das gleiche gilt für eine Bedienung mit feuchten Händen, wie dies beim Befüllen der Flasche mit Leitungswasser häufig unvermeidlich ist.

Die vorgenannten Nachteile sind zwar zum Teil bei dem aus der DE 29 30 699 C2 bekannten Gerät vermieden. Die Anschlußvorrichtung sieht darin einen gegen die Flaschenmündung mit Druck beaufschlagbaren Anschlußstutzen vor, dessen Dichtung dabei dichtend gegen die Flaschenmündung angepreßt wird. Durch das aus dem Anschlußstück vorstehende Düsenrohr ist das Einsetzen einer gefüllten Flasche jedoch auch dabei relativ umständlich.

Eine weitere Ausführungsform ist aus der DE 31 08 591 A1 bekannt. Diese sieht ein am Gehäuse verschiebbares Verschlußstück mit einer Dichtung vor, welche dichtend gegen die Flaschenmündung anpreßbar ist. Nachteilig an diesem Gerät ist jedoch, daß beim Einsetzen ebenfalls - wie bei dem vorgenannten Gerät - das vorstehende Düsenrohr in den Flaschenhals "eingefädelt" werden muß. Außerdem scheidet bei diesem Gerät eine bequeme Einhand-Bedienung deswegen aus, weil die Dichtung nicht mit genügender Andruckkraft gegen die Flaschenmündung gepreßt werden kann. Eine zu geringe Anpreßkraft führt jedoch zu einer unbefriedigenden Kohlensäuresättigung. Es müssen also in jedem Fall Abstriche an der Qualität der Getränke hingenommen werden.

Ein Nachteil, der sämtlichen vorgenannten Geräten gemeinsam ist, besteht darin, daß das Düsenrohr jeweils nur relativ kurz sein kann, da ansonsten das Einsetzen der Flasche übermäßig erschwert würde. Die begrenzte Länge des Düsenrohrs wirkt sich jedoch insofern negativ auf die Getränkequalität aus, als daß für eine möglichst gute Kohlensäuresättigung ein tieferes Eintauchen in die Flüssigkeit erforderlich ist.

Angesichts der vorangehend erläuterten Problematik ergibt sich die Aufgabenstellung der Erfindung, eine Vorrichtung der eingangs genannten Art zur Verfügung zu stellen, die eine bequemere und einfachere Handhabung, insbesondere eine Einhand-Bedienung ermöglicht und dabei eine bessere Qualität der Karbonisierung bringt als die bekannten Geräte.

Zur Lösung dieses Problems schlägt die Erfindung ausgehend von dem eingangs erwähnten Stand der Technik vor, daß das Düsenrohr im Verschlußstück längsverschiebbar gelagert ist, daß die Anschlußeinrichtung eine manuell betätigbare, kraftverstärkende Anpreßvorrichtung mit einem Betätigungselement aufweist, die bei Betätigung die Dichtung mit verstärkter Betätigungskraft gegen die Flaschenmündung preßt und die in dieser Dichtstellung selbsthaltend ist.

Eine erfindungsgemäße Besonderheit liegt darin, daß das Düsenrohr im Verschlußstück und damit relativ zur Dichtung längsverschiebbar ist, d. h., daß das Düsenrohr bezüglich des Abschnitts, der aus der Dichtungsebene heraus in das Flascheninnere vorsteht, ein- und ausfahrbar ist.

Weiterhin zeichnet sich die Erfindung durch eine von Hand bedienbare Anpreßvorrichtung aus. Diese hat ein Betätigungselement, beispielsweise einen Betätigungshebel mit Handgriff, der von Hand verschwenkbar ist. Dieses Betätigungselement ist mit einem kraftverstärkenden Getriebe verbunden, welches ausgangsseitig die Dichtung mit entsprechend seinem Kraftübertragungsverhältnis erhöhter Betätigungskraft gegen die Flaschenmündung preßt. Eine Besonderheit der Antriebsmechanik liegt darin, daß in seiner Endstellung, d. h. in der Dichtstellung bei dichtend auf die Flaschenmündung aufgepreßter Dichtung eine stabile, selbsthaltende Lage eingenommen wird. Das bedeutet, daß der Anpreßdruck über die Anpreßvorrichtung in das Gehäuse geleitet wird, also nicht entgegen der Betätigungsrichtung auf das Betätigungselement zurückwirkt. Die Fixierung in der Dichtstellung erfolgt mithin ohne zusätzliche Rast- oder Sperrelemente, so daß also auch keine Betätigung derartiger Vorrichtungen erforderlich wird. Beispielsweise kann ein Exzenter vorgesehen sein, der über seinen Totpunkt verdreht wird und dort einen Anschlag hat, so daß er in der Anpreßstellung eine stabile Lage hat.

Besondere Vorteile der erfindungsgemäßen Ausgestaltung liegen darin, daß die Bedienungsfreundlichkeit gegenüber dem vorbekannten Stand der Technik deutlich erhöht ist, indem für die Benutzer eine bequeme, echte Einhand-Bedienung möglich wird. Um ein Getränk mit Kohlensäure zu versetzen, kann die damit gefüllte Getränkeflasche nämlich einfach in das Aufnahmefach gestellt werden, ohne daß das Düsenrohr, wie im Stand der Technik, in den Flaschenhals "eingefädelt" werden müßte. Durch das erfindungsgemäß längsverschiebbar ausgestaltete Düsenrohr wird es nämlich vor dem Einsetzen der Flasche einfach zum Verschlußstück hin zurückgezogen, so daß es zur Flaschenmündung hin nicht oder nur unwesentlich vorsteht. Nachdem die Getränkeflasche auf diese Weise unterhalb der Dichtung plaziert worden ist, erfolgt - wiederum mit einer Hand - die Bedienung des Betätigungselements der Anpreßvorrichtung. Durch die darin realisierte Kraftübersetzung wird die Dichtung mit hinreichender Anpreßkraft gegen die Flaschenmündung gepreßt, so daß eine ausreichende Dichtung gegen den beim Karbonisieren auftretenden Überdruck gewährleistet ist. Dadurch, daß die Anpreßvorrichtung in der Dichtstellung selbsthaltend ist, ist es nicht erforderlich, das Betätigungselement gedrückt zu halten. Mit derselben Hand kann das Düsenrohr nunmehr in das Flascheninnere abgesenkt werden und beim Erreichen der gewünschten Eintauchtiefe durch Öffnen des Dosierventils die Karbonisierung eingeleitet werden.

An dieser Stelle sei darauf hingewiesen, daß die Eintauchtiefe des Düsenrohrs maßgeblichen Einfluß auf die Qualität der Karbonisierung, d. h. die Sättigung und die gewünschte Feinperligkeit des kohlensäurehaltigen Getränks, beispielsweise des Sodawassers, hat. Durch Versuche konnte man ermitteln, daß das Optimum bei einer relativ großen Eintauchtiefe liegt. Diese ist mit der erfindungsgemäßen Anordnung ohne weiteres zu realisieren, da aufgrund der Verschiebbarkeit des Düsenrohrs im Hinblick auf eine möglichst bequeme und einfache Handhabung keine Rücksicht auf die Länge des aus der Dichtung herausstehenden Düsenrohrs genommen werden müßte. Durch Verschieben des Düsenrohrs in dem Verschlußstück bzw. der Dichtung ist die Eintauchtiefe nämlich unabhängig davon vorgebbar.

Zur Entnahme der Flasche nach dem Karbonisieren werden die vorgenannten Schritte - wiederum mit derselben Hand - in umgekehrter Reihenfolge ausgeführt. Ein weiterer Vorteil ist dabei, daß das Abblasen des in der Flasche enthaltenen überschüssigen Kohlendioxids beim Lösen der Dichtung mittels des Betätigungselements praktisch ohne Gefährdung der Benutzer erfolgt. Aufgrund der nunmehr umgekehrten Kraftübersetzung der Anpreßvorrichtung wird nämlich kaum Kraft auf das Betätigungselement ausgeübt, was wiederum der Einhand-Bedienung zugute kommt. Es ist ebenfalls nicht erforderlich, die Flasche von Hand gegen den beim Abblasen auftretenden Druckstoß abzustützen, wie dies beim Schraub- oder Bajonettanschluß erforderlich ist.

Durch die erfindungsgemäßen Merkmale wird somit erstmals eine besonders bequeme, echte Einhand-Bedienung ermöglicht, wobei zugleich eine hohe Getränkequalität, beispielsweise des Sodawassers, gewährleistet ist.

Zweckmäßigerweise ist das Verschlußstück von oben gegen die Flaschenmündung absenkbar gelagert und an der Anpreßvorrichtung angebracht. Dadurch ist zum einen ein kompakter Aufbau des Gerätes möglich, zum anderen wird eine Erschütterung der Getränkeflasche beim Betätigen der Anpreßvorrichtung vermieden, was bei einem Bewegen der Flasche der Fall sein könnte und der Getränkequalität abträglich wäre.

Aus den vorgenannten Gründen weist die Anpreßvorrichtung vorzugsweise ein selbsthemmendes Krafübersetzungsgetriebe auf. Dadurch wird erreicht, daß auf die Dichtung ausgeübte Druckkräfte nicht direkt auf das Betätigungselement zurückwirken. Es ist beispielsweise denkbar, dieses als Exzenter-Getriebe auszugestalten, bei dem das Betätigungselement mit einer Exzenterscheibe verbunden ist. Diese wirkt mit ihrer Exzenterfläche von oben auf das Verschlußstück und hat vorzugsweise eine Anschlagfläche, so daß sie kurz nach dem Überschreiten des Totpunktes in Anpreßstellung (Dichtstellung) eine stabile Lage einnimmt. Diese Ausführung hat den Vorteil, einfach herstellbar und überaus zuverlässig zu sein. Alternativ ist es ebenfalls möglich, ein Hebelgetriebe mit Kniehebeln oder dergleichen vorzusehen.

Die Dichtung ist zweckmäßigerweise als Flachdichtung aus elastischem Material, vorzugsweise nachgiebigem Kunststoff oder dergleichen ausgebildet. Diese Formgebung hat den Vorteil, daß zum einen keine Radialkräfte auf die Flaschenmündung ausgeübt werden und zum anderen im Zusammenwirken mit der Flaschenmündung ein Sicherheits-Überdruckventil gebildet wird, welches bei Überdruck in der Flasche selbsttätig abbläst. Durch die Härte, d. h. die Nachgiebigkeit des Kunststoffes, werden Toleranzen in der Flaschenhöhe ausgeglichen.

Es ist weiterhin vorteilhaft, daß das Bedienungsorgan der Anpreßvorrichtung mit einem Sperrventil zusammenwirkt, welches in der Kohlendioxid-Leitung vor dem Dosierventil liegt, und dieses Sperrventil in Dichtstellung der Anpreßvorrichtung öffnet. Durch diese Anordnung ist sichergestellt, daß keinesfalls Kohlendioxid durch das Düsenrohr abgegeben wird, solange die Anpreßvorrichtung geöffnet ist.

Die Bedienung des verschiebbaren Düsenrohrs erfolgt vorzugsweise über ein am oberen Ende des Düsenrohrs angebrachtes Handhabungselement, beispielsweise eine zur Einhand-Bedienung gut geeignete Drucktaste oder dergleichen. Wird dieses Handhabungselement heruntergedrückt, wird das Düsenrohr ins Flascheninnere abgesenkt. Dadurch, daß das Handhabungselement in zurückgezogener Position des Düsenrohrs federbelastet ist, bewegt sich das Düsenrohr nach dem Loslassen des Handhabungselements selbsttätig in die zurückgezogene Ausgangsstellung zurück.

Besonders bedienungsfreundlich wird die vorangehend erläuterte Anordnung dadurch, daß das Handhabungselement mit der Betätigungseinrichtung des Dosierventils verbunden ist. Beim Niederdrücken des Handhabungselements wird damit beim Erreichen einer vorgegebenen Eintauchtiefe des Düsenrohrs in die Getränkeflasche selbsttätig die Kohlensäureabgabe ausgelöst. Die Abfolge der Funktionsschritte ist damit fest definiert.

Indem das Betätigungsorgan der Anpreßvorrichtung das Handhabungselement des Düsenrohrs verriegelt, kann das Düsenrohr solange nicht abgesenkt und das Dosierventil nicht geöffnet werden, bis die Anpreßvorrichtung in Dichtstellung gebracht ist. Fehlbedienungen sind damit so gut wie ausgeschlossen.

Eine alternative Ausführungsform der Erfindung sieht vor, daß das Düsenrohr teleskopartig ausfahrbar ausgebildet ist. Vorzugsweise ist es dabei als Kolben einer mit Kohlendioxid beaufschlagbaren Kolben-Zylinder-Einheit ausgebildet. Diese Kolben-Zylinder-Einheit ist über das Dosierventil an die Kohlendioxid-Druckflasche angeschlossen. Das Zylinderrohr dieser Kolben-Zylinder-Einheit kann beispielsweise senkrecht oben am Verschlußstück angebracht sein. Wird nun das Dosierventil zum Karbonisieren eines Getränkes geöffnet, wird zunächst die Kolben-Zylinder-Einheit mit Druck beaufschlagt, so daß das Düsenrohr teleskopartig in das Flascheninnere ausgefahren wird. Damit wird praktisch ein halbautomatischer Betrieb realisiert. Es ist nämlich keine zusätzliche mechanische Handbetätigung beim Absenken des Düsenrohres mehr erforderlich.

Sobald die Kohlendioxidzufuhr durch das Dosierventil unterbrochen wird, wird das Düsenrohr durch den in der Getränkeflasche aufgebauten Druck selbsttätig wieder in die Ausgangsstellung zurückgeschoben. Gegebenenfalls kann in der Kolben-Zylinder-Einheit eine schwache Feder angeordnet sein, um das Zurückziehen des Düsenrohres zu unterstützen. Somit wird das Düsenrohr bei der Beendigung des Karbonisierungsvorganges praktisch automatisch wieder eingefahren, so daß die Flasche einfach entnehmbar ist.

Die heutzutage meistenteils an Karbonisierungsgeräten verwendeten, hochwertigen Kunststoff-Getränkeflaschen haben selbst bei hohen Überdrücken eine gute Sicherheit gegen Zerbersten. Um jedoch allen Eventualitäten Rechnung zu tragen, die sich beispielsweise aus der Verwendung nicht geeigneter Flaschen ergeben könnten, kann an dem Gehäuse eine vor die Zugangsöffnung des Flaschenfachs verschiebbare Berstschutzhaube angebracht sein, die vorzugsweise aus durchsichtigem Material besteht, beispielsweise aus Plexiglas. Diese kann auch als Sicherungskorb aus einem Metallgitter oder dergleichen ausgebildet sein, der in Längsrichtung von oben absenkbar ist. Eine hohe Funktionalität wird dadurch erreicht, daß die Berstschutzhaube mit dem Betätigungselement der Anpreßvorrichtung verbunden ist. Beim Betätigen der Anpreßvorrichtung wird die Berstschutzhaube damit selbsttätig abgesenkt.

Zur Verwendung als Haushaltsgerät wird der Kohlendioxid-Druckbehälter vorzugsweise im Gehäuse aufgenommen, welches als kompaktes Standgehäuse ausgebildet ist.

In dem Flaschenfach sind - bevorzugt auf der Rückseite - Führungsschienen angebracht. Diese erleichtern das Einsetzen einer Getränkeflasche.

Zur Anpassung an unterschiedliche Flaschengrößen können auf die Standfläche in dem Flaschenfach formschlüssig einsetzbare Distanzstücke bzw. Untersetzer vorgesehen sein.

Weiterhin ist es vorteilhaft, daß an dem Düsenrohr ein lösbar befestigter, austauschbarer Düsenkopf angebracht ist. Durch die Verwendung von Düsenköpfen mit Düsen, die in Anzahl, Abmessungen und Form verschieben ausgestaltet sein können, ist es möglich, die Karbonisierung zu beeinflussen. Nach den Wünschen der Benutzer ist es beispielsweise denkbar, austauschbare Düsenköpfe für unterschiedliche Sättigungsgrade oder die Perligkeit des kohlensäurehaltigen Getränks zur Verfügung zu stellen.

Selbstverständlich ist die erfindungsgemäße Vorrichtung mit zusätzlichen Sicherungsventilen versehen. Diese verhindern den Aufbau von schädlichem Kohlendioxid-Überdruck im Gerät und sollten mehrfach redundant ausgebildet sein.

Bei einer vorteilhaften Weiterbildung der erfindungsgemäßen Vorrichtung sind elektromechanische, hydraulische und/oder pneumatische Betätigungselemente angeordnet, zur Betätigung der Anpreßvorrichtung und/oder des Düsenrohres. Die in der Grundversion unmittelbar manuell zu betätigenden Funktionen können nunmehr über die genannten motorischen Elemente mittelbar betätigt, das heißt ferngesteuert werden. Damit ergibt sich die Möglichkeit einer mittelbaren manuellen Steuerung, oder auch die Integration der erfindungsgemäßen Vorrichtung in einen Getränkeautomaten, der, beispielsweise zur Steuerung der Bedienungsfolge mit einer elektrischen Steuerung versehen ist.

Ausführungsbeispiele der Erfindung sind im folgenden anhand der Zeichnungen näher erläutert. Es zeigen im einzelnen:
- Fig. 1.:: eine schematische Darstellung einer erfindungsgemäßen Vorrichtung in geöffnetem Zustand;
- Fig. 2:: eine Vorrichtung wie in Fig. 1 mit angeschlossener Getränkeflasche;
- Fig. 3:: eine Vorrichtung wie in Fig. 2 bei der Kohlensäurebaufschlagung;
- Fig. 4:: eine Weiterbildung einer Vorrichtung gemäß Fig. 1;
- Fig. 5:: eine alternative Ausführungsform eines Düsenrohres.

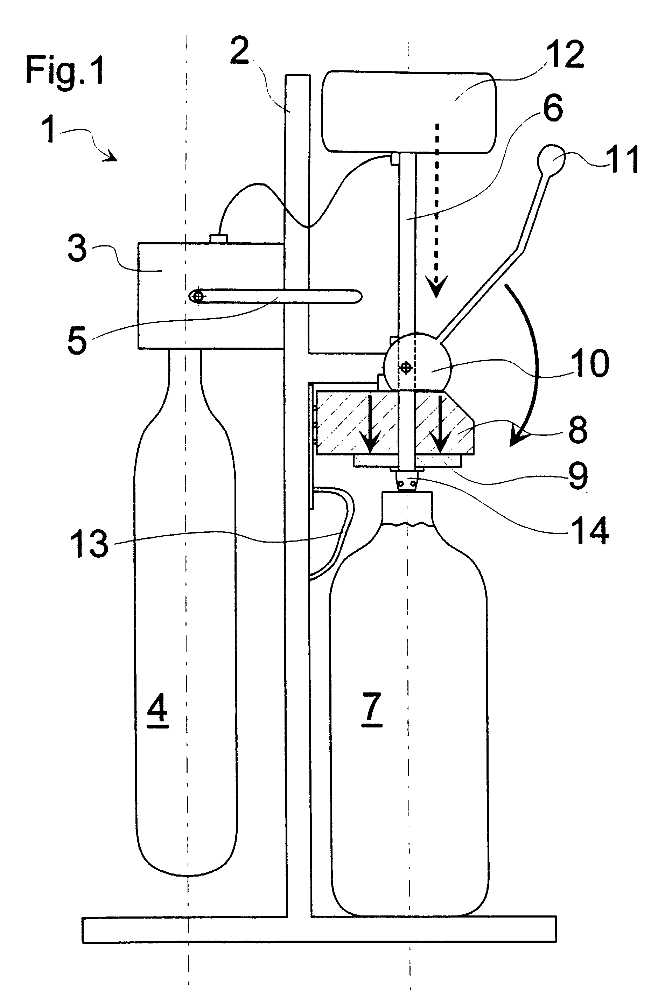

Im folgenden finden bei der Beschreibung der Darstellungen in den Fig. 1 bis 4 dieselben Bezugszeichen Verwendung, soweit sie identische Bestandteile betreffen.

Die Fig. 1 bis 3 zeigen eine erfindungsgemäße Vorrichtung zur Karbonisierung von Getränken, die schematisch mit abgenommener Außenverkleidung dargestellt ist und als Ganzes mit dem Bezugszeichen 1 versehen ist.

Die Vorrichtung 1 weist ein Gehäuse 2 auf, welches aus dem hier dargestellten, rahmenartigen Träger zusammen mit der hier nicht dargestellten Außenverkleidung gebildet wird und sämtliche Funktionsbestandteile in sich aufnimmt.

Hinten an der Vorrichtung 1, also in der Darstellung links, befindet sich ein Dosierventil 3, welches gleichzeitig als Anschlußarmatur für eine Kohlensäure-Druckflasche 4 ausgebildet ist. Das Dosierventil 3 hat einen Auslösehebel 5.

An das Dosierventil 3 ist ein Düsenrohr 6 angeschlossen.

Im vorderen Bereich der Vorrichtung 1, also in der Zeichnung rechts, befindet sich unten ein Aufnahmefach für eine darin eingesetzte, gefüllt dargestellte Getränkeflasche 7. Oberhalb dieser Getränkeflasche 7 befindet sich ein Verschlußstück 8, welches in Richtung des Doppelpfeils nach unten verschiebbar an dem Gehäuse 2 gelagert ist und auf seiner Unterseite eine gegen die Flaschenmündung gerichtete Flachdichtung 9 aus nachgiebigem Kunststoff ausweist. Dieses Verschlußstück 8 bildet zusammen mit dem Exzenter 10, der drehbar am Gehäuse 2 gelagert ist und einen Handhebel 11 aufweist, die erfindungsgemäße Anpreßvorrichtung. Deren Funktion wird im folgenden erläutert.

Das bereits genannte Düsenrohr 6 ist senkrecht, längsverschiebbar durch das Verschlußstück 8 und die Dichtung 9 hindurchgeführt und am oberen Ende mit einer Bedienungstaste 12 versehen. Mittels dieser Bedienungstaste 12 kann das Düsenrohr 6 nach unten bewegt werden, wie dies mit dem gestrichelten Pfeil dargestellt ist.

Mit dem Bezugszeichen 13 sind Führungsschienen bezeichnet, die das Einsetzen der Getränkeflasche 7 erleichtern. Durch eine - nicht dargestellte - Einformung ist die Getränkeflasche 7 unten ebenfalls am Gehäuse 2 arretiert.

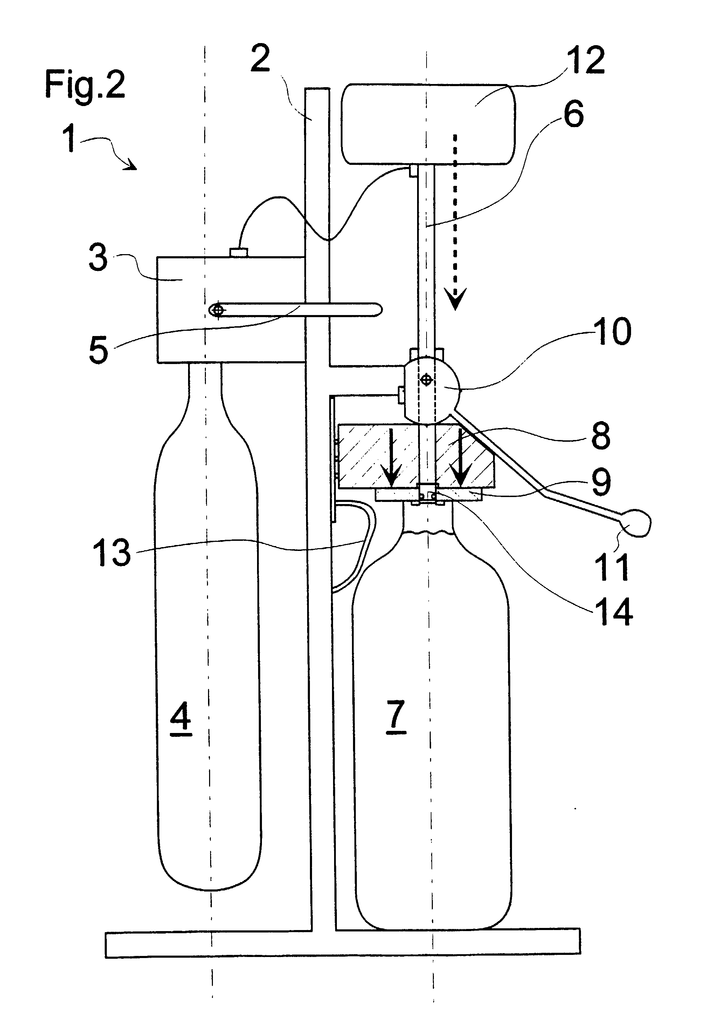

Die erfindungsgemäße Vorrichtung 1 funktioniert folgendermaßen: Zunächst wird die Getränkeflasche 7 mit Getränk gefüllt, welches mit Kohlensäure versetzt werden soll und wie in Fig. 1 dargestellt in das Aufnahmefach unter die Dichtung 9 gestellt. Durch die Führungsschienen 13 ist dies einfach und bequem mit einer Hand durchführbar. Anschließend wird der Handhebel 11 - mit derselben Hand - in Richtung des gebogenen Pfeils nach unten umgelegt, bis die in Fig. 2 dargestellte Dichtstellung erreicht wird. Durch das Verschwenken des Exzenters 10 ist dabei das Verschlußstück 8 nach unten abgesenkt, so daß die Dichtung 9 abdichtend auf die Flaschenmündung gepreßt wird.

Durch das Exzentergetriebe wird auf das Verschlußstück 8 dauerhaft eine Andruckkraft ausgeübt, was in Fig. 2 mit den beiden durchgezogenen Pfeilen angedeutet wird. Die Anpreßvorrichtung ist in dieser Stellung selbsthemmend, d. h., daß auf den Handhebel 11 entgegen der Bedienungsrichtung keine Kraft ausgeübt wird.

Aufgrund des Kraftübersetzungsverhältnisses des Exzentergetriebes ist der in Fig. 2 dargestellte Dichtungszustand mühelos mit einer Hand einstellbar.

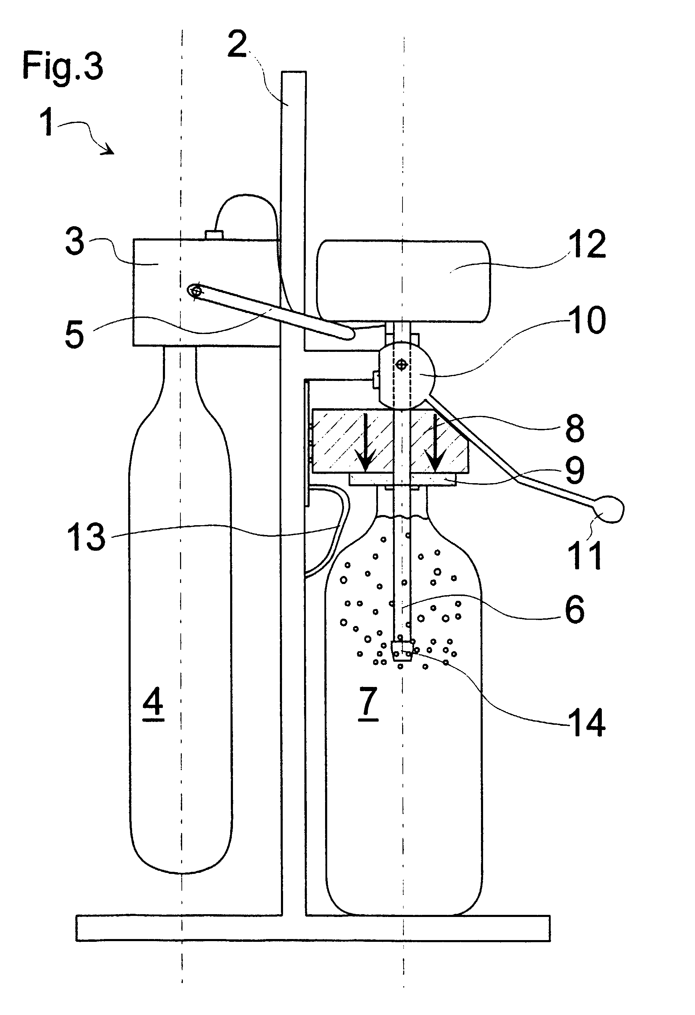

Im nächsten Schritt wird durch einen Druck auf die Bedienungstaste 12 - mit derselben Hand - das Düsenrohr 6 durch das Verschlußstück 8 und die Dichtung 9 hindurch das Innere der Getränkeflasche 7 und damit mit der optimalen Eintauchtiefe in das Getränk eingeführt. Beim Erreichen des in Fig. 3 dargestellten Endzustandes wirkt die Bedienungstaste 12 mit dem Auslösehebel 5 zusammen, so daß über das Dosierventil 3 Kohlendioxid durch das Düsenrohr 6 in das Getränk abgegeben wird.

Der mit dem Bezugszeichen 14 bezeichnete Düsenkopf ist austauschbar an dem Düsenrohr 6 angebracht, beispielsweise verschraubt. Er kann somit leicht gegen eine solche Ausführung mit einer anderen Anzahl, oder kleineren oder größeren Düsenöffnungen ausgetauscht werden.

Zur Entnahme der Getränkeflasche 7 wird zunächst die Bedienungstaste 12 losgelassen, die dann durch den Überdruck in der Getränkeflasche 7 und gegebenenfalls mittels einer - hier nicht dargestellten - Feder in die Ausgangsstellung, wie in Fig. 1 und 2 dargestellt, zurückgedrückt wird. Anschließend wird mit derselben Hand der Handhebel 11 in die Ausgangsstellung gemäß Fig. 1 zurückbewegt. Dabei wird die Dichtung 9 von der Flaschenmündung abgehoben, so daß überschüssiges Kohlendioxid aus der Getränkeflasche 7 gefahrlos abgeblasen wird. Nachdem die in Fig. 1 dargestellte Ausgangsposition wieder erreicht ist, kann die Getränkeflasche 7 mit dem nunmehr fertigen, frischen sprudelnden Getränk aus der Vorrichtung 1 entnommen werden und ist nun fertig zum Verzehr.

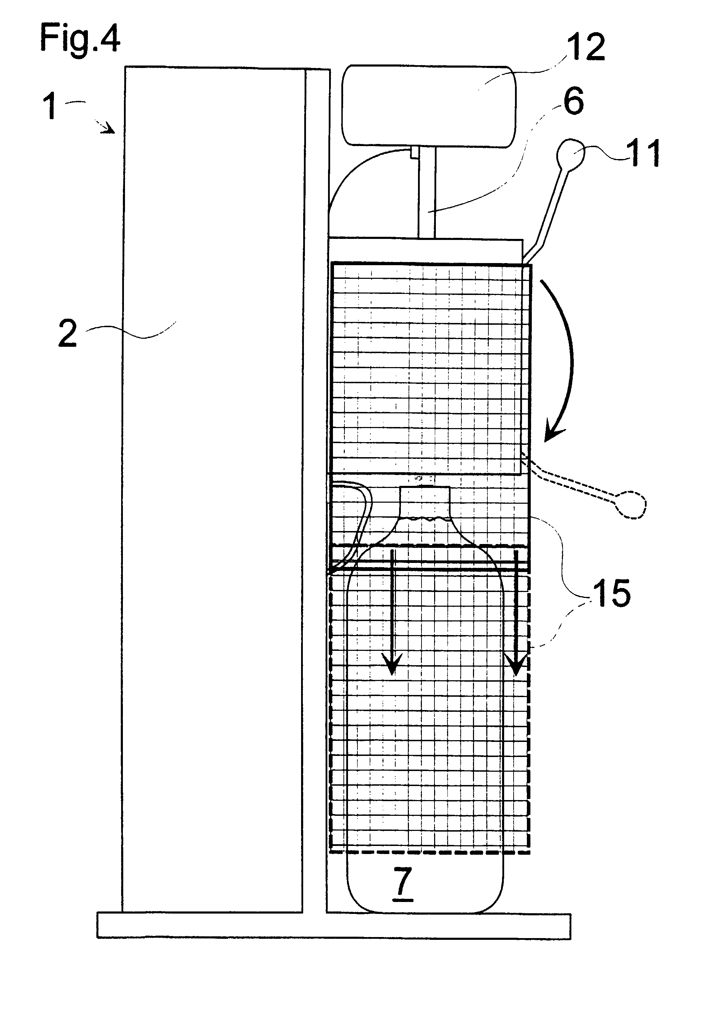

Fig. 4 zeigt eine verkleidete Ausführung der in den Fig. 1 bis 3 dargestellten Vorrichtung. Mit dem Bezugszeichen 15 ist darin ein Sicherungskorb bezeichnet, der in Richtung der durchgezogenen Pfeile am Gehäuse 2 verschiebbar gelagert ist. Dieser Sicherungskorb 15 ist mit dem Handhebel 11 verbunden. Wird der Handhebel 11, wie mit dem gebogenen Pfeil dargestellt nach unten in die gestrichelte Position verschwenkt, also in die in Fig. 2 dargestellte Dichtstellung gebracht, wird der Sicherungskorb 15 in Richtung der gerade Pfeile nach unten in die gestrichelte Sicherungsposition abgesenkt. Das Schließen der dadurch realisierten Berstschutzvorrichtung erfolgt mithin selbsttätig, ohne daß einer weiterer Handgriff erforderlich wäre.

Die Bedienung der erfindungsgemäßen Vorrichtung 1 ist mithin vollständig mit einer einzigen Hand bequem durchführbar. Die Bedienung ist einfacher und sicherer als im Stand der Technik, wobei durch das erfindungsgemäß verschiebbare Düsenrohr 6 eine optimale Eintauchtiefe und damit optimale Karbonisierungsbedingungen vorgebbar sind.

Durch den austauschbaren Düsenkopf 14 kann die Vorrichtung 1 auf unterschiedlichste Bedürfnisse hinsichtlich der Karbonisierung abgestimmt werden.

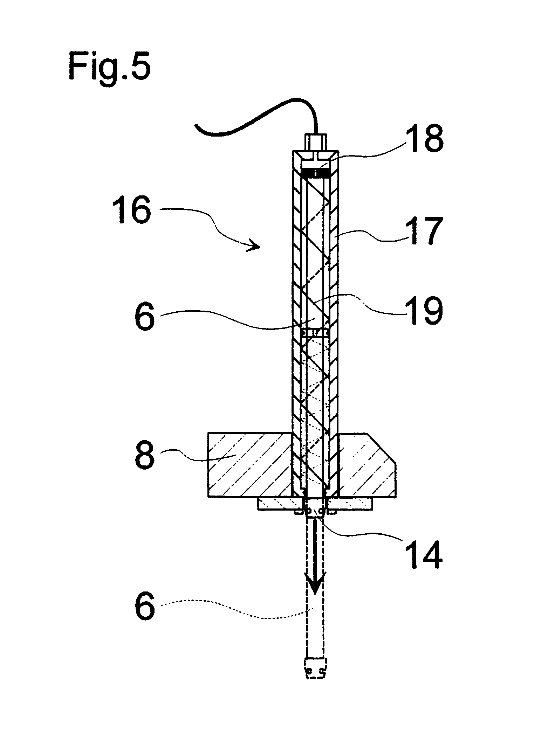

In Figur 5 ist eine alternative Ausführungsform eines Düsenrohrs 6 dargestellt. Das besondere daran ist, daß das Düsenrohr 6 als Kolben einer Kolben-Zylinder-Einheit 16 ausgebildet ist. Deren Zylinderrohr 17 ist beispielsweise oben am Verschlußstück 8 gemäß Figur 1 bis 4 angebracht, so daß das Düsenrohr 6 nach unten in den Flascheninnenraum teleskopartig ausfahrbar ist, wie in dieser Darstellung mit dem Pfeil angedeutet.

Der in dieser Darstellung obenliegende, in dem Zylinderrohr 17 abgedichtet längsverschiebbare Kolbenboden des Düsenrohres 6 ist mit einer Durchlaßbohrung 18 versehen, deren Querschnitt dem Austrittsquerschnitt des Düsenkopfes 14 entspricht.

Mit der Rückholfeder 19 ist das Düsenrohr 6 entgegen der Ausfahrrichtung federbelastet.

Das Zylinderrohr 17 ist in der dargestellten Ausführung hinten, das heißt oben an die vom Dosierventil 3 kommende Kohlendioxidleitung angeschlossen. Beim Karbonisieren wird die Kolben-Zylinder-Einheit 16 mit Kohlendioxid beaufschlagt, so daß das Düsenrohr 6 druckbeaufschlagt nach unten, das heißt ins Flascheninnere ausfährt. Bei Erreichen des Endanschlages strömt Kohlendioxid durch die Durchgangsöffnung 18 sowie den Düsenkopf 14 ins Flascheninnere aus und sorgt für die Karbonisierung des Getränks.

Sobald die Karbonisierung beendet wird, das heißt der Kohlendioxidzufluß über das Dosierventil 3 unterbrochen wird, wird das Düsenrohr 6 durch den in der Getränkeflasche enthaltenen Druck nach oben zurückgepreßt. Dadurch und durch die Rückholfeder 19 wird das Düsenrohr 6 ins Zylinderrohr 17 eingefahren.

Die Vorteile dieses praktisch halbautomatischen Betriebs liegen darin, daß keine separate Handbewegung zur Betätigung des Düsenrohres 6 erforderlich ist. Die Bedienung wird somit nochmals vereinfacht.

Es ist gleichfalls möglich, weitere motorische Antriebselemente - elektromechanisch, hydraulisch oder pneumatisch - vorzusehen, mit denen weitere Funktionen, beispielsweise das kraftverstärkte Anpressen des Verschlußstücks 8 auf die Getränkeflasche 7 erreicht wird. Dabei ist es denkbar, das Gerät nach wie vor für einen manuellen, halbautomatischen oder auch vollautomatischen Betrieb auszulegen.

## Patentansprüche

1. Vorrichtung zur Karbonisierung von in Flaschen enthaltenen Getränken, mit einem Gehäuse, welches ein Flaschen-Aufnahmefach hat, einem Kohlendioxid-Vorratsbehälter, welcher an ein manuell bedienbares Dosierventil anschließbar ist, einem an das Dosierventil angeschlossenen Düsenrohr, und einer Anschlußeinrichtung, die ein Verschlußstück mit einer Dichtung aufweist, die dichtend gegen die Flaschenmündung anpreßbar ist, wobei das Düsenrohr durch das Verschlußstück in das Flascheninnere abgedichtet hindurchgeführt ist, **dadurch gekennzeichnet,** daß das Düsenrohr (6) im Verschlußstück (8) längsverschiebbar gelagert ist, und daß die Anschlußeinrichtung eine manuell betätigbare, kraftverstärkende Anpreßvorrichtung mit einem Bedienungselement (11) aufweist, die bei Betätigung die Dichtung (9) gegen die Flaschenmündung preßt und die in dieser Dichtstellung selbsthaltend ist.

2. Vorrichtung nach Anspruch 1, dadurch gekennzeichnet, daß das Verschlußstück (8) von oben gegen die Flaschenmündung absenkbar gelagert ist und an der Anpreßvorrichtung angebracht ist.

3. Vorrichtung nach Anspruch 1, dadurch gekennzeichnet, daß die Anpreßvorrichtung ein selbsthemmendes Kraftübertragungsgetriebe (8, 10, 11) aufweist.

4. Vorrichtung nach Anspruch 3, dadurch gekennzeichnet, daß das Betätigungselement (11) der Anpreßvorrichtung mit einem Exzentergetriebe (10) verbunden ist.

5. Vorrichtung nach Anspruch 3, dadurch gekennzeichnet, daß das Betätigungselement (11) der Anpreßvorrichtung mit einem Hebelgetriebe verbunden ist.

6. Vorrichtung nach Anspruch 1, dadurch gekennzeichnet, daß die Dichtung (9) als Flachdichtung aus elastischem Material ausgebildet ist.

7. Vorrichtung nach Anspruch 1, dadurch gekennzeichnet, daß das Bedienungselement (11) der Anpreßvorrichtung mit einem Sperrventil zusammenwirkt, welches in der Kohlendioxid-Leitung vor dem Dosierventil (3) liegt, und dieses Sperrventil in Dichtstellung der Anpreßvorrichtung öffnet.

8. Vorrichtung nach Anspruch 1, dadurch gekennzeichnet, daß am oberen Ende des Düsenrohrs (6) ein Handhabungselement (12) angebracht ist.

9. Vorrichtung nach Anspruch 1, dadurch gekennzeichnet, daß das Düsenrohr (6) teleskopartig ausfahrbar ausgebildet ist.

10. Vorrichtung nach Anspruch 9, dadurch gekennzeichnet, daß das Düsenrohr (6) als Kolben einer mit Kohlendioxid beaufschlagbaren Kolben-Zylinder-Einheit (16) ausgebildet ist.

11. Vorrichtung nach Anspruch 8, dadurch gekennzeichnet, daß das Handhabungselement (12) in zurückgezogener Position des Düsenrohrs (6) federbelastet ist.

12. Vorrichtung nach Anspruch 8, dadurch gekennzeichnet, daß das Handhabungselement (12) mit der Betätigungseinrichtung (5) des Dosierventils (3) verbunden ist.

13. Vorrichtung nach Anspruch 8, dadurch gekennzeichnet, daß das Betätigungselement (11) der Anpreßvorrichtung das Handhabungselement (12) des Düsenrohrs (6) verriegelt.

14. Vorrichtung nach Anspruch 1, dadurch gekennzeichnet, daß an dem Gehäuse (2) eine vor die Zugangsöffnung des Flaschenfachs verschiebbare Berstschutzhaube (15) angebracht ist.

15. Vorrichtung nach Anspruch 14, dadurch gekennzeichnet, daß die Berstschutzhaube (15) mit dem Betätigungselement (11) der Anpreßvorrichtung verbunden ist.

16. Vorrichtung nach Anspruch 1, dadurch gekennzeichnet, daß der Kohlendioxid-Vorratsbehälter (4) im Gehäuse (2) aufgenommen wird, welches als kompaktes Standgehäuse ausgebildet ist.

17. Vorrichtung nach Anspruch 1, dadurch gekennzeichnet, daß in dem Flaschenfach Führungsschienen (13) angebracht sind.

18. Vorrichtung nach Anspruch 1, dadurch gekennzeichnet, daß in das Flaschenfach Distanzstücke formschlüssig einsetzbar sind.

19. Vorrichtung nach Anspruch 1, dadurch gekennzeichnet, daß an dem Düsenrohr (6) ein lösbar befestigter, austauschbarer Düsenkopf (14) angebracht ist.

20. Vorrichtung nach Anspruch 1, dadurch gekennzeichnet, daß mindestens ein Kohlendioxid-Sicherheitsventil vorhanden ist.

21. Vorrichtung nach Anspruch 1, dadurch gekennzeichnet, daß elektromechanische, hydraulische und/oder pneumatische Betätigungselemente angeordnet sind zur Betätigung der Anpreßvorrichtung und/oder des Düsenrohres (6).
